Europäisches Patentamt

(19) European Patent Office

Office européen des brevets

(11) Publication number: **0 053 549**
A1

# EUROPEAN PATENT APPLICATION

(21) Application number: 81401861.0

(22) Date of filing: 24.11.81

(51) Int. Cl.³: **B 23 K 5/16**

(30) Priority: 28.11.80 US 210945

(43) Date of publication of application: 09.06.82
Bulletin 82/23

(84) Designated Contracting States: **DE FR GB IT**

(71) Applicant: **THE BENDIX CORPORATION, Executive Offices Bendix Center, Southfield Michigan 48037 (US)**

(72) Inventor: **Johnson, Colin Anthony, 20 Sharon St., Sidney, N.Y. 13838 (US)**

(74) Representative: **Brullé, Jean et al, Service Brevets Bendix 44, rue François 1er, F-75008 Paris (FR)**

(54) Method of attaching and hermetically sealing a steel housing to the opening in an aluminum housing.

(57) A method of attaching and hermetically sealing a steel connector housing to the opening in an aluminum exciter housing, characterized by the steps of placing a roll bonded strip (30) of aluminum (32) and steel (31) around the connector housing (20) with the aluminium portion (32) of the strip facing outwardly and touching the steel portion (31) of the strip facing inwardly and touching the steel connector housing; placing the connector housing (20) in the opening of the exciter enclosure (1); welding (33) the steel portion (31) of the strip to the steel connector housing (20); and welding (34) the aluminum portion (32) of the strip to the enclosure (1).

## METHOD OF ATTACHING AND HERMETICALLY SEALING
## A STEEL HOUSING
## TO THE OPENING IN AN ALUMINUM HOUSING

This invention relates to hermetically sealing together steel and aluminum and is more specifically related to hermetically sealing a steel connector housing to the opening in an aluminum housing for a jet engine exciter.

When a steel connector housing must be connected to an aluminum enclosure or, conversely, when an aluminum connector housing must be connected to a steel enclosure, soldering or brazing is used to join the metals together. Fusion welding cannot be used because of the metallurgical incompatibility between steel and aluminum. A typical installation would be submarine bulk head, an aircraft control panel, or a jet engine exciter. Generally, exiter housings and their outlets are made of aluminum. Steel connectors are used instead of aluminum when the connector requires a hermetic glass seal because an aluminum connector would melt when the glass seal is attempted. Accordingly, a steel enclosure and a steel connector are used when a hermetically sealed enclosure is required as the steel of the two can be fusion welded together to give a hermetic seal. However, although such a steel unit can be used at higher temperatures, a substantial weight penalty is involved as steel is about three times heavier than aluminum. This extra weight is of course undesirable in an aircraft. Using a steel connection with an aluminum housing would be impractical because of the metallurgical incompatibility of the materials which prevents the use of fusion welding. Therefore, the connection between the steel connector with an aluminum enclosure is usually made by soldering with a solder having a tin and lead content of about 60/40. However, such an alloy looses much of its strength at elevated temperatures and is, therefore, not normally used at temperatures over 250 degrees Fahrenheit. Consequently, aluminum housings with steel connectors, although lighter, have temperature limitations and usually mechanically weak soldered joints. Examples of methods for making connections between different materials may be found in U.S. Patent 3,020,987, issued February 13, 1962 and entitled "Method of And Means for Forming Welding Connections Between Metallic Bodies of Different Welding Characteristics ". This patent discloses the joining together of similar metals by resistance (spot) welding. However, since spot welds are intermittent welds they do not provide a hermetic seal between the materials being welded. Accordingly a jet engine exciter unit fabricated with spot welds will not be hermetically sealed and, hence, will not operate properly at high altitudes.

The present invention proposes a method of attaching and hermetically sealing a steel housing to the opening in an aluminum housing, characterized in that it comprises the steps of:

- placing a roll bonded strip of aluminum and steel around the steel housing with the steel portion of the strip facing inwardly and the aluminum portion of the strip facing outwardly and touching the aluminum housing;
- placing the steel housing in the openingof the aluminum enclosure;
- fusion welding the entire seam between the steel portion of the strip to the steel housing, and
- fusion welding the seam between the aluminum portion of the strip to the enclosure.

This invention provides a method of fusion welding a steel connector housing to an aluminum exciter enclosure to provide a hermetic seal between the two. The invention is characterized by the use of a roll bonded strip of steel and aluminum arranged between the connector housing and enclosure opening so that the steel portion of the strip faces and contacts steel and the aluminum portion of the strip faces and contacts aluminum. The exposed demarcation lines or seams between the same materials i.e., steel and steel, are fusion welded to provide a hermetic seal.

Accordingly, it is an advantage of this invention to provide a method of hermetically sealing a steel connector housing to an aluminum jet engine exciter enclosure.

Another advantage of this invention is that it provides a jet engine exciter assembly that is lighter in weight and can be exposed to higher temperatures and altitudes without loss of hermeticity.

Another advantage of this invention is that it provides a stronger connection between a connector housing and an exciter enclosure made of dissimilar metals.

Another advantage of this invention is that it provides a less expensive and faster means of connecting a steel connector housing to an aluminum jet engine exciter enclosure.

Another advantage of this invention is that it eliminates soldering of connections between steel connector housings and aluminum jet engine exciter enclosures so as to eliminate the use of expensive filler metals and electroplating necessary with soldering techniques.

The invention will now be described in details with reference to the accompanying drawings herein:

- Figure 1 illustrates a jet engine exciter assembly.

- Figure 2 is an end view of the jet engine exciter assembly shown in Figure 1

- Figures 3 and 4 illustrate different arrangements of the invention.

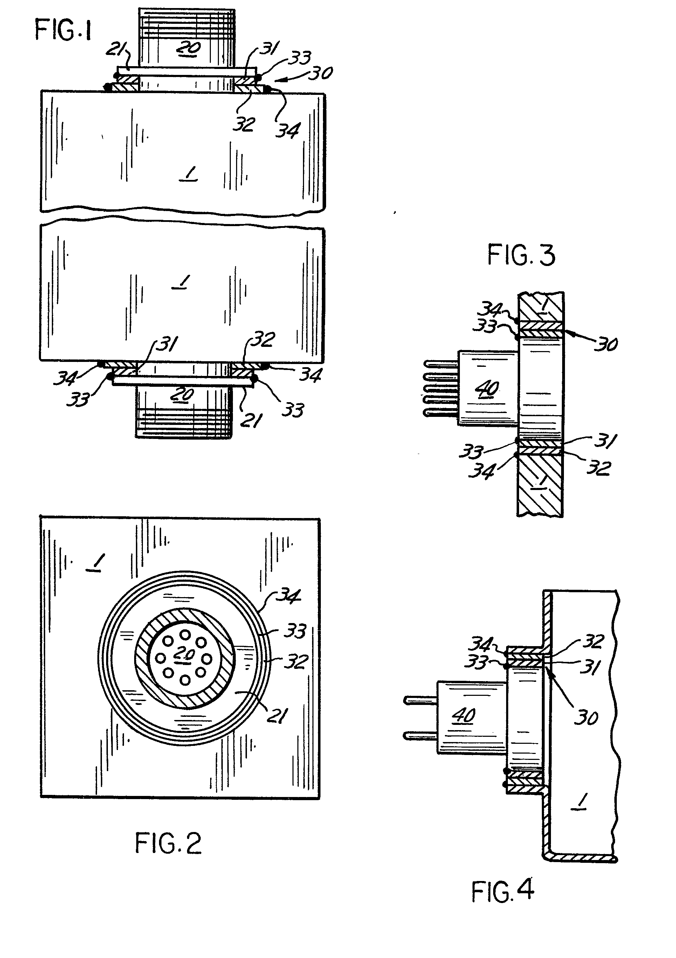

Referring now to the drawings, Figure 1 illustrates a jet engine exciter enclosure 1 having attached thereto one or more electrical connectors 20. Each electrical connector 20 includes a flange or shoulder 21 that may be comprised of steel or aluminum. If comprised of steel, it is connected to an aluminum enclosure 1 by a washer shaped roll bonded strip of aluminum and steel arranged so that the aluminum portion 32 of the strip faces and contacts the aluminum portion 32 of the strip faces and contacts the aluminum enclosure 1 and the steel portion 31 of the roll bonded strip faces and contacts the steel shoulder 21 of the connector 20. Since the aluminum and steel is roll bonded together, there is a hermetic seal between the two materials of the strip where they interface. A first fusion weld 33 completely around the seam between the steel shoulder 21 and the steel portion 31 of the roll bonded strip 30 hermetically seals them together. Similarly, a second fusion weld 34 completely around the seam between the enclosure 1 and the aluminum portion 32 of the roll bonded strip 30 hermetically seals them together.

Figures 2 Illustrates an end view of the jet engine exciter assembly shown in Figure 1 and illustrates how the second fusion weld 34 extends along the entire junction or seam between the aluminum portion 32 of the strip and the aluminum exciter housing 1 and the first fusion weld 33 extends along the entire junction between the steel portion of the strip and the steel connector housing 20. Fusion welds 33 and 34 completely seal the enclosure 1.

Figure 3 Illustrates a connector assembly 40 which does not have an annular shoulder on the outside thereof. Accordingly, a ring shaped roll bonded strip 30 of aluminum and steel is placed in the space between the connector housing 40 and the enclosure 1. In this arrangement, the fusion welds 33 and 34 also extend completely around the seam between the aluminum portion 32 of the strip 30 and the enclosure 1 and the seam between the steel portion 31 of the strip 30 and the conncector housing 40.

Figure 4 is another arrangement of a jet engine exciter enclosure 1 where the opening includes a protrusion Again, fusion welds 33 and 34 extend 360 degrees around the connector 40 to completely and hermetically seal the inside of the enclosure 1 from the outside air.

While a preferred embodiment of this invention has been disclosed, it will be apparent to those skilled in the art, the changes may be made to the invention as set forth in the appended claim, and in some instances, certain features of the invention may be used to advantage with our corresponding use of other features. Accordingly, it is intended that the illustrative and descriptive materials herein be used to illustrate the principles of the invention and not to limit the scope thereof.

## CLAIM

A method of attaching and hermetically sealing a steel housing to the opening in an aluminum housing, characterized in that it comprises the steps of:

- placing a roll bonded strip (30) of aluminum (32) and steel (31) around the steel housing (20) with the steel portion (31) of the strip facing inwardly and the aluminum portion (32) of the strip facing outwardly and touching the aluminum housing;

- placing the steel housing (20) in the opening of the aluminum enclosure (1);

- fusion welding (33) the entire seam between the steel portion (31) of the strip to the steel housing, and

- fusion welding (34) the seam between the aluminum portion (32) of the strip to the enclosure.

FIG·1

FIG. 3

FIG.2

FIG.4

0053549

1/1

0053549

Application number

European Patent Office

**EUROPEAN SEARCH REPORT**

EP 81 40 1861.0

## DOCUMENTS CONSIDERED TO BE RELEVANT

| Category | Citation of document with indication, where appropriate, of relevant passages | Relevant to claim |
|---|---|---|
| X | US - A - 3 495 319 (FINNEGAN) <br> * fig. 1, 2 * <br> ---- | 1 |

**CLASSIFICATION OF THE APPLICATION (Int. Cl.³)**

B 23 K 5/16

**TECHNICAL FIELDS SEARCHED (Int. Cl.³)**

B 23 K 5/00

F 16 B 5/08

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 12-02-1982 | ZAPP |

EPO Form 1503.1 06.78